# EUROPEAN PATENT SPECIFICATION

(11) **EP 2 784 404 B1**
(45) Date of publication and mention of the grant of the patent: **17.10.2018**
(21) Application number: 14157721.3
(22) Date of filing: 04.03.2014
(51) Int. Cl.: F24F 13/02

(54) **Ventilation ducting connector**
Belüftungskanalverbinder
Connecteur à conduits de ventilation

(30) Priority: 04.03.2013 GB 201303769
(43) Date of publication of application: 01.10.2014
(73) Proprietor: NuAire Limited, Caerphilly Mid Glamorgan CF83 1NA (GB)
(72) Inventor: Biggs, Colin, Caerphilly, Mid Glamorgan CF83 1XH (GB); Jenkins, Richard, Caerphilly, Mid Glamorgan CF83 1XH (GB)
(74) Representative: Jones, David Alan

(56) References cited:
- EP-A1- 1 063 461
- WO-A1-2012/071662
- CN-Y- 2 644 840
- US-A- 5 378 028
- US-A1- 2009 321 105

## Description

The present invention relates to a ventilation ducting connector and in particular to a connector for joining adjacent sections of ventilation ducting from a compressible material.

Heating, ventilation, and air conditioning (H VAC) systems are used to provide a regular airflow to rooms in a building such as an industrial building or residential dwelling. H VAC systems require ventilation ducting to transport the regulated air to the point of use. H VAC systems typically include a temperature regulation system for providing the air to a room at a predetermined set temperature. In order to maintain close control over the air temperature it is important that the ventilation ducting provides thermal insulation to insulate the temperature regulated airflow from the external ambient air temperature. It is therefore known to provide ventilation ducting with insulation such as an expanded foam which surrounds the ducting to provide thermal insulation. The structural inner walls of such ventilation ducting sections defining the conduits are typically metal or a rigid plastic material. Ducting sections of this type have been found to be excessively heavy which can present particular problems when ducting is being installed overhead requiring the installer to support the weight of the ducting sections during installation. In addition, the material cost at such ducting sections is found to be prohibitive for certain cost sensitive applications.

It is known to provide ducting sections formed entirely from expanded foam or a similar material. Such ducting sections provide the required thermal insulation and low porosity while also being lightweight and relatively inexpensive. However, the flexible and compressible nature of this material requires and alternative means of joining the ducting sections. Rigid ducting sections typically use a fixed configuration connector such a flange connector or similar, which holds and retains the rigid ducting sections. However, it is not possible to use connectors of this type with foam ducting as the compressible nature of the material can cause it to compress or otherwise change shape and become detached from the connector and/or results in gaps between the ducting and connector which can cause leakage.

CN2644840Y discloses the preamble of claim 1.

It is therefore desirable to provide an improved ventilation ducting connector and/or ventilation ducting assembly that addresses the above problems and/or provides improvements generally.

According to the present invention there is provided a ventilation ducting connector as defined in the accompanying claims. There is also provided in accordance with the present invention a ventilation ducting assembly as defined in the accompanying claims.

In an embodiment of the invention there is provided a ventilation ducting connector for connecting ventilation ducting sections formed from a compressible material. The connector is arranged to receive the free ends of two contiguous ducting sections such that the ducting sections define a continuous air conduit. The collar is reconfigurable between an open configuration in which the ducting sections may be freely inserted into the collar and a clamped configuration in which it surrounds part of each ducting section and provides a compressive force to hold the ducting sections in a relative position. The collar comprises at least one inwardly extending projection arranged on its inner surface to penetrate the outer surface of at least one of the ducting sections when the collar is in the clamped configuration. The inward projection may be a locating projection and/or a sealing projection configured to longitudinally or radially fix the collar relative to the ducting and/or provide a seal between the collar and the ducting.

The at least one projection may comprise at least one of a sealing member configured to penetrate the surface of the ducting section and create a seal between the ducting section and the collar, and a holding member configured to penetrate the surface of the ducting section to hold the collar and the ducting section in a fixed relative position. The sealing member uses the compressible nature of the ducting material to create a seal by either compressing or penetrating the surface. This advantageously obviates the requirement for a separate sealing member which improves ease of installation and reduces complexity and cost. The holding member projections combine with the clamping action of the collar to hold and retain the compressible material ducting within the collar providing a significantly improved connection and obviating the requirement for further fixing means such as ducting tape.

The collar may comprise a longitudinal axis which aligns with the longitudinal axes of the corresponding ducting sections and the sealing member comprises at least one rib extending around the inner surface of the collar transversely to the longitudinal axis. The rib creates a sealing engagement with the ducting to prevent loses from the ducting.

The at least one rib may comprise a first rib extending substantially continuously around the inner surface of the collar at a first end of the collar and a second rib extending substantially continuously around the inner surface of the collar at the opposing second end of the collar. In this way, sealing is achieved either side of the join between the ducting sections.

The at least one rib preferably tapers inwardly towards its distal edge, providing a v-shaped blade type configuration which improves penetration and creates a wedging contact which improves sealing..

The collar may comprise a longitudinal axis which aligns with the longitudinal axes of the corresponding ducting sections and the holding member may comprise and at least one projection extending from the inner surface of the collar at a discrete position around the inner periphery in a direction transverse to the longitudinal axis. Preferably the at least one individual projection comprises a plurality of discrete individual projections arranged at spaced locations in the transverse direction around the inner surface of the collar.
The discrete lugs or projections rotationally fix the ducting.

At least two of the individual projections may be spaced from each other in the longitudinal direction either side of the longitudinal centre of the collar to engage both ducting sections at either end of the collar.

At least one of the individual projections may include a distal face which slopes inwardly substantially in the direction of the centre of the collar in the transverse direction. The collar may comprise a first collar section and a section collar section which are relatively movable to allow the collar to be reconfigured between the open and clamped configurations and a centre point is defined between the transverse ends of the first collar section, and wherein the at least one projection includes first and second projections located at transversely spaced locations on opposing sides of the centre line having distal faces which slope inwardly in opposing transverse directions towards the centre of the collar arranged to create opposing wedging actions to urge the ducting section in opposing transverse directions as the first and second projections penetrate the ducting section to grip and retain the ducting.

A first pair of first and second projections may be located at a first longitudinal end of the collar and a second pair of first and second projections located at an opposing second longitudinal end of the collar.

A first plurality of discrete individual projections may be arranged proximate a first end of the collar and a second plurality of discrete individual projections are arranged proximate the opposing end of the collar.

At least one sealing member may be provided in addition to the at least one projection. The at least one sealing member is preferably a resilient, compressible sealing member such as an o-ring. The sealing member is located within the collar between the collar and ducting and arranged to be compressed against the surface of the ducting when the collar is in the clamped configuration. The sealing member me be provided in addition to or instead of a sealing rib, and is particularly advantageous for higher pressure systems where increased sealing pressure is required.

The collar may comprise a first collar section and a second collar section which are relatively movable to allow the collar to be reconfigured between the open and clamped configurations.

The ventilation ducting connector may comprise at least one locking means for locking the first and second sections together in the clamped configuration.

The first and second collar sections may be detachable sections and the collar comprises at least two locking means located on opposing sides of the collar for locking the respective first and second ends of the first and second sections together in the clamped configuration.

The at least one locking means may be arranged to selectively lock the first and second collar sections in a plurality of locking positions to selectively vary the clamping force by varying the resultant internal cross sectional area of the collar.

The collar may comprise an inwardly extending locating member configured to engage an end face of each ducting section to longitudinally locate the ducting sections relative to the collar.

Preferably the locating member comprises an inwardly extending flange located substantially centrally within the collar in the longitudinal direction.

The collar may comprise first and second collar sections including a main body section and a flange section and the flange section extends past the end of at least one end of at least one of the main body section of the first and second sections to define a locating tab.

In another embodiment of the invention there is provided a ventilation ducting assembly comprising a plurality of ducting sections formed from a compressible material; and a plurality of ducting section connectors according to any preceding claim. The ducting sections and connector are configured such that the end portions of adjacent ducting sections are receivable within the collar and wherein when the collar is in the clamped position it applies a compressive force to the ducting sections to hold the ducting sections in a fixed relative position with the at least one projection penetrating the surface of at least one of the ducting sections.

At least one end face of the ducting sections may comprise an outer recess located towards the outer circumferential surface of the ducting section and a corresponding inner rib located radially inwards which projects longitudinally outwardly of the recess, the recess being configured to accommodate the flange section of the ducting connector and the rib being configured to extend longitudinally inwards into the connector past the flange to abut the adjacent ducting section to which it is to be connected.

In another embodiment of the invention there is provided a ventilation ducting connector for connecting compressible ducting sections, comprising a collar reconfigurable between an open configuration and a clamped configuration, wherein the collar comprises at least one inwardly extending projection arranged on its inner surface configured to penetrate the outer surface of a compressible ducting section located within the collar when the collar is in the clamped position.

The present invention will now be described by way of example only with reference to the following illustrative figures in which:
Figure 1 shows a ventilation ducting assembly according to an embodiment of the invention;
Figure 2 shows a ducting connector according to an embodiment of the invention in the open configuration;
Figure 3 shows the ducting connector of figure 2 in eth clamped configuration;
Figure 4 shows a transverse section view of the connector of figure 2 including a section of the ducting;
Figure 5 shows a longitudinal section view of the connector and the ducting;
Figure 6 shows a ducting connector according to an embodiment of the invention; and

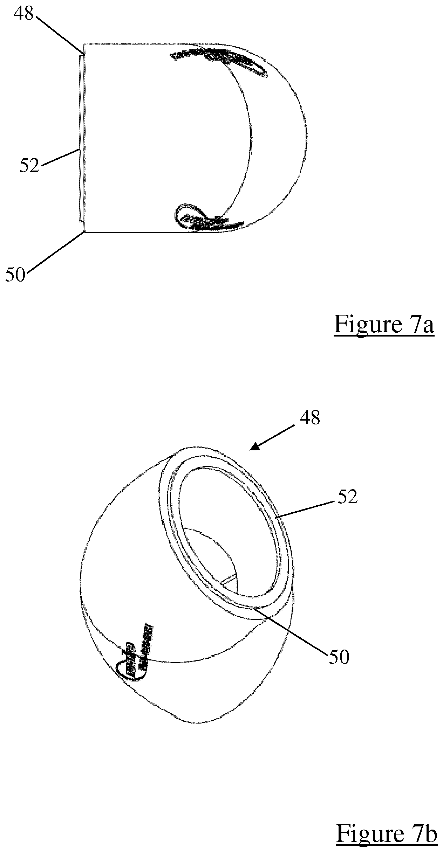

Figures 7a and 7b show a ducting section according to an embodiment of the invention.

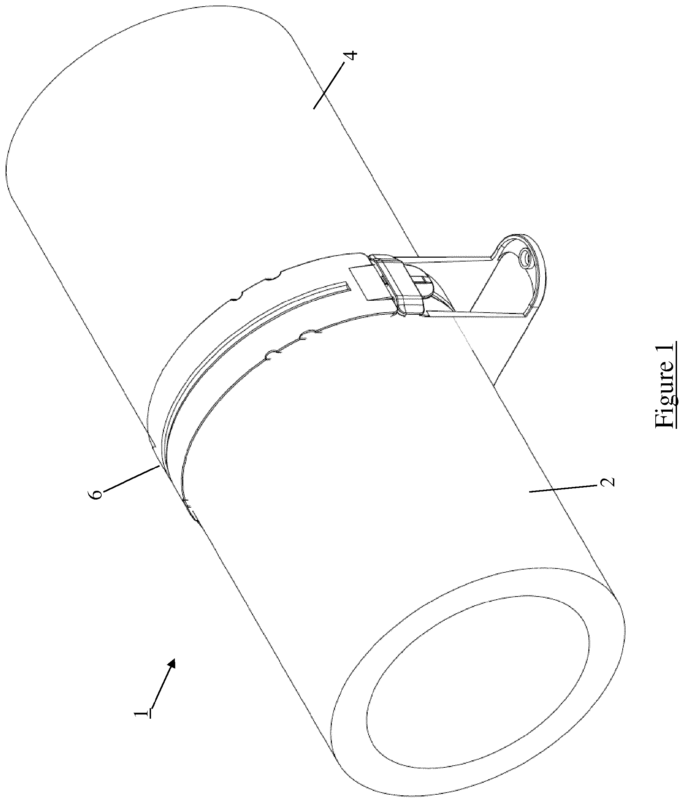

Referring to Figure 1 a ventilation ducting assembly 1 comprises a first ducting section 2 and a second ducting section 4. The first and second ducting sections form a contiguous part of a long ducting pathway.

The ducting sections are formed from a compressible material such as an expanded foam material having low permeability and high thermal insulating properties. A further benefit provided by ducting with this material is low weight and low cost. The expanded foam ducting 2, 4 defines the air conduct and ventilation system with the inner surface of the ventilation duct being of the same expanded foam material, as compared to arrangements of the prior art in which the foam material surrounds an inner ducting section formed from a rigid material. The ducting sections 2, 4 are arranged end to end in an adjacent and contiguous manner such that they defining a continuous air pathway.

In ventilation assemblies using ducting sections formed from a rigid, non-bendable material, the rigid ducting sections may be bolted, clamped or otherwise secured together with additional sealing members being provided to ensure a sealing fit. Typically, an adhesive ducting tape is also used to retain the ducting within the connector as well as further improving the seal.

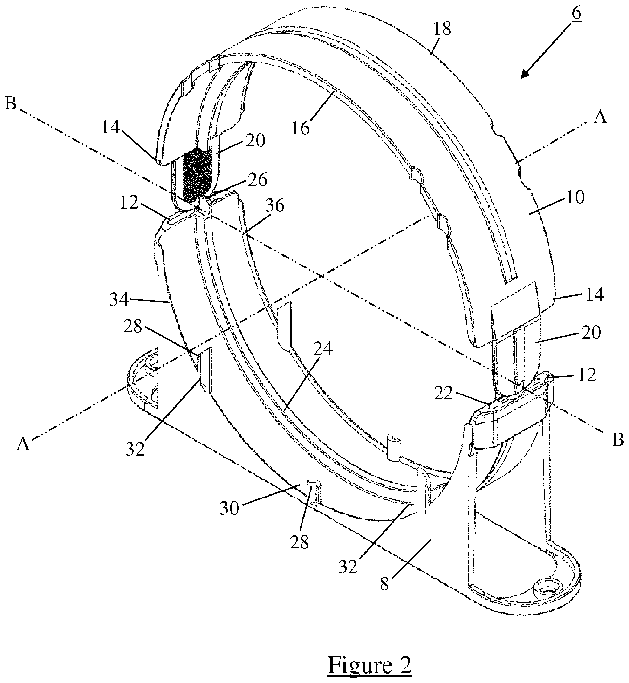

In the present invention a connector 6 is provided for joining contiguous sections of ducting formed from a compressible material. The connector 6 comprises a collar formed from a plastic material which extends circumferentially around the adjacent ends of the ducting sections 2,4. As shown in Figure 2, the ducting 2,4 is substantially annular, which in the embodiment shown comprises a substantially circular shape. However, it will be appreciated that this shape corresponds to the circular outer surface of the cylindrical ducting sections and that the term 'annular' is not limited to a circular shape and rather relates to a continuous ring which may be of any shape corresponding to the outer peripheral shape of the corresponding ducting sections, for example square or rectangular.

The collar includes a longitudinal axis as defined in figure 2 by the line A-A. A transverse axis extends transversely to the longitudinal axis and is defined in figure 2 by line B-B. The connector 6 is split along a central transverse axis defining the diameter of the collar and includes a first collar section 8 and a second collar section 10. The first and second collar sections 8,10 are substantially elongate semi-circular and arcuate in shape each defining half of the annular form of the collar 6. The first collar section 8 includes opposing ends 12 at either end of its elongate length and the second collar section 10 includes opposing ends 14. In the longitudinal direction the collar 6 includes longitudinally opposed edges 16 and 18 which define the longitudinal ends of the collar 6.

In Figure 2 the collar is shown in the open position in which the second collar section 10 is detached and separated from the first collar section 8 to expand the effective inner perimeter of the collar 6. The first and second 8,10 collar sections may be movably connected at one end for example by a living hinge, although preferably the collar sections 8,10 are 2-part and completely detachable. The collar 6 includes locking means for connecting the first and second collar section 8,10 which includes locking tabs 20 extending from the ends 14 of the second collar section 10 which have an inner surface including a serrated or toothed profile. The locking tabs 20 are received in corresponding slots 22 provided at the ends 12 of the first collar section 8, which each include a corresponding serrated section or pawl member for engaging and locking against the serrated section of the locking tabs 20 to lock and hold the locking tabs 20 within the slots 22 to secure the first and second collar sections 8,10 together. The multiple serrations of the locking tabs 20 provide multiple locking positions providing a degree of adjustment in the relative positions of the first and second collar sections 8,10 to enable the clamping force of the collar to be selectively varied by varying the effective inner perimeter of the collar 6.

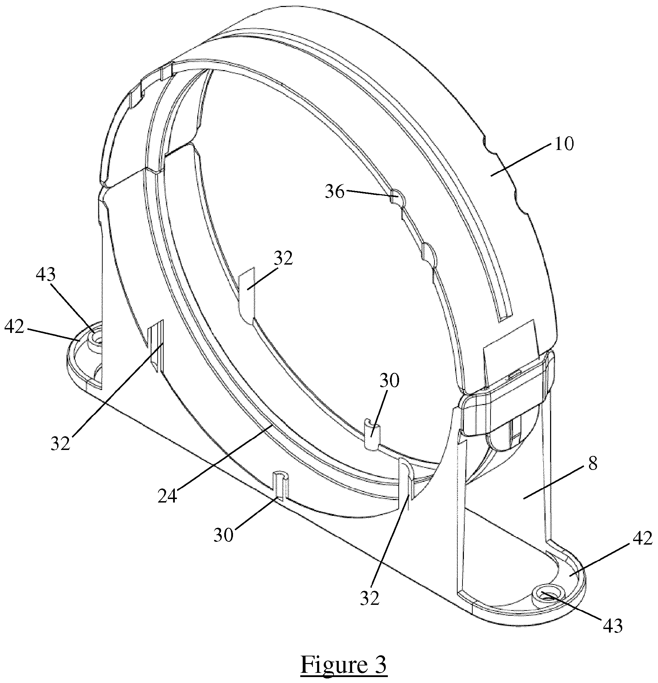

As shown in Figure 2 and 3 a flange section 24 extends transversely around the inner circumference of the collar extending along the inner transverse length of both the first collar section 8 and second collar section 10 at a longitudinally central position. The flange 24 extends in a direction perpendicular to the plane of the inner surface from which it projects. The flange 24 extends inwardly a distance less than the wall thickness of the ducting and provides an abutment service for engagement by the ducting sections 2, 4 to longitudinally locate the ducting sections 2, 4 within the collar 6. As shown in Figure 2 the portion of the flange section 24 located within the first collar section 8 includes at either end a tab 26 which extends past both ends 12 of the collar section 8. The tab 26 provides an abutment for locating the ducting sections as they approach the collar 6. When the collar sections 8,10 are in the clamped configuration the tab 26 is received within a corresponding recess in the flange section 24 of the second collar section 10.

A plurality of spigots or lugs 28 are provided at radially spaced locations extending from the inner surface of the collar 6. The lugs 28 are integrally moulded with the collar 6 and project inwardly into the collar 6 and are arranged at the outer edges 16 and 18 of the first collar section 8 at longitudinally at radially spaced positions. The lugs 28 define piercing spikes for penetrating the surface of the ducting sections located within the collar 6, which is enabled by the use of a compressible ducting material. The lugs 28 are substantially semi cylindrical each having an open central void which is outwardly facing. This configuration provides the lugs 28 with improved structural rigidity while also providing a form which is easily mouldable as compared, for example, to a completely cylindrical form. The lugs 28 extend inwardly in a common parallel direction that is transverse to the longitudinal axis. Specifically, a centre lug 30 is located centrally between the ends 12 of the first collar section 8. The central lug 30 projects substantially perpendicular to the plane of the surface from which it extends towards the centre of collar 6. The outer lugs 32 are transversely spaced outwardly on opposing sides of the centre lug 28 extending in a common parallel direction.

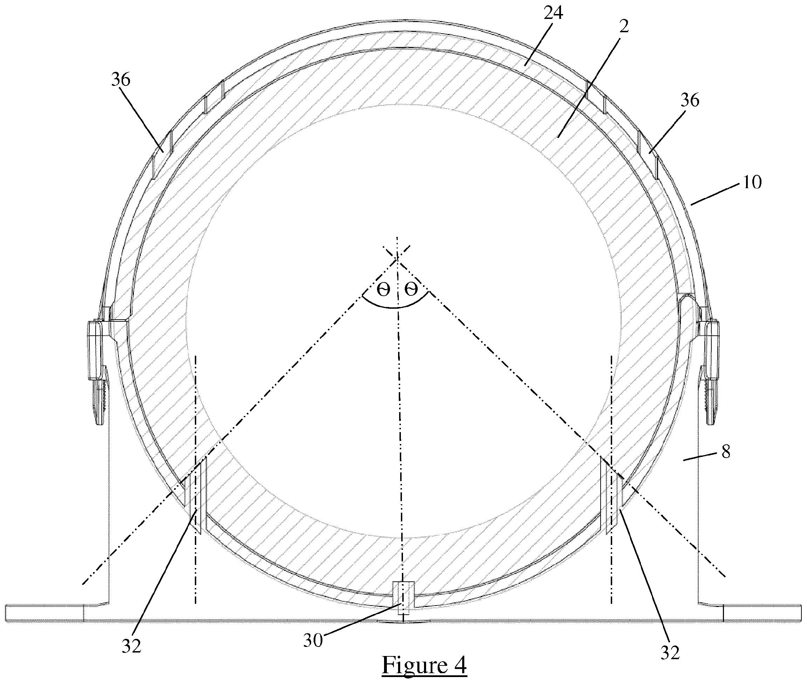

Each projecting lug 28 includes an inner face at its distal end. The central lug 30 has a distal face oriented in a plane perpendicular to the direction of projection of the lug 30. As shown in Figure 4 the outer lugs 32 include sloping distal faces. The distal face of each lug slopes upwardly and inwardly towards the centre of the collar 6, in a direction away from the portion of the collar wall closest to the distal end. This sloping distal face creates a tapered tip to the lug 32 and when viewed end on in the longitudinal direction the innermost part of the wall of each lug 32 is longer than the outermost part taken in the transverse direction.

A series of smaller projections 36 extending from scalloped recesses in outer edges 16, 18 of the second collar section 10 also project inwardly into the collar 6, as can be seen in Figure 4. The lugs 36 extend in the same parallel direction as the lugs 28 of the first collar section. The function of the lugs 28,36 are discussed in further detail below. While the projections 28 are described as lugs, they may be any suitable configuration able o penetrate the surface of the ducting and provide a transversely facing wall that engages with the ducting and prevents rotation. For example, the projections may comprise longitudinally extending ribs or teeth.

As shown in Figure 3 a pair of ribs extend around the inner surface of the collar 6 at its outer edges. A first rib 38 and a second rib 40 extend circumferentially around the longitudinal outer edges 16,18 of the inner surface of the collar 6 in the transverse direction. The first rib 38 and second rib 40 extend around the inner circumference of both the first collar section 8 and section collar section 10 to define substantially continuous ribs when the first 8 and second 10 collar sections are in the closed configuration. The ribs 38,40 are located at opposing ends 12,14 of the collar. As can be seen in Figure 3 a small discontinuation in the ribs occurs at the ends 12,14 of the collar sections 8,10 to avoid interference when the collar 6 is being tightened to the clamped position. The ribs 38,40 have a tapered v-shaped section taken in the longitudinal direction to define a blade like profile suitable for piercing into or compressing the surface of the ducting to create a sealing contact with the ducting. Depending on the specific profile of the ribs 38,40, the material of the ducting and/or the clamping force applied, the ribs 38,40 may create a sealing contact either by compressing the surface of the ducting or by piercing and penetrating the surface. In both arrangements the ribs 38,40 extend inwardly of the surface plane defined at the uncompressed outer diameter of the ducting.

In use the collar 6 is placed in the open configuration. A first section of ducting 2 is introduced to the first collar section 8 with the second section 10 removed. The tab 26 is used to longitudinally located and align the ducting section 2 relative to the collar section 8. One aligned the ducting section 2 is the pushed into the collar section 8 until the outer surface of the ducting 2 makes substantially continuous contact with the inner surface of the collar section 8. As the ducting is urged into position the lugs 28 engage and begin to penetrate the surface of the ducting, extending into the wall of the ducting 2. The length of the lugs 28 is selected to ensure that they do not extend all the way through the ducting 2 into the centre channel, and also such that they extend inwardly further than the flange 24 and the ribs 38,40. As the lugs 32 penetrate the ducting wall the sloping distal faces create a wedging contact with the ducting urging the ducting in the transversely outwards direction. As shown in Figure 4 the faces of the opposing lugs 32 at a common end slope in opposing directions resulting in the ducting being urged in opposing directions at either side. This causes the ducting to grip against the lugs 32 with the effect that the lugs 32 hold the ducting within the collar section once the user releases the ducting. This advantageously allows the user to then pick up the second collar section 10 without having to hold the ducting, which is particularly useful where the ducting is being installed over head.

As shown in Figures 2 and 3 the first collar section 8 includes a fixing bracket 42 arranged substantially tangentially to the main body of the collar section 8. The bracket 42 is configured to be secured to a surface such as a wall or ceiling and includes apertures 43 on opposing sides of the collar section 8 for receiving screws or other fixings. In one embodiment the installation routing may include securing the first collar section 8 to a celling or wall, and then inserting the ducting section into the collar section 8 as described above. When the ducting is inserted and held within the first ducting section 8, with eth ducting for example being suspending overhead in the collar section 8, the second collar section 10 is then connected to the first collar section by inserting the locking tabs 20 into the slots 22. Pressure is applied to the second collar section 10 to urge it against the surface of the ducting and cause it to compress. As the collar section 10 moves further towards the first collar section 8 the toothed profile of the locking tabs 20 progressively locks the tabs 20 causing a progressively increased clamping force. Once a suitable clamping position is achieved, the force may be removed and the second collar 10 remains in its clamped position relative to the first collar section 8.

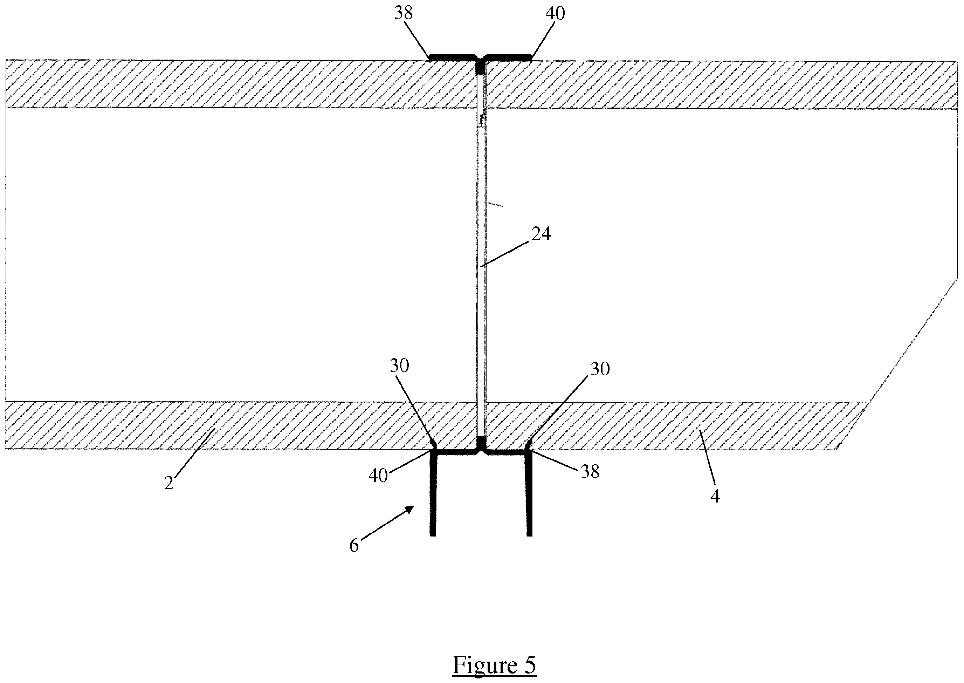

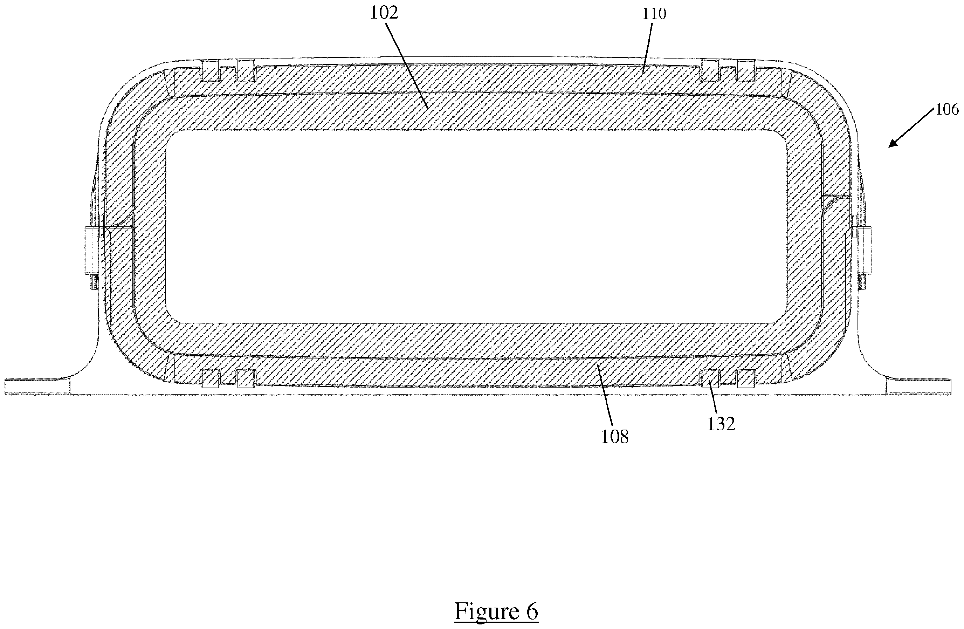

In the clamped configuration, the ribs 38,40 extending into the surface of the ducting sections at either end of the collar 6 forming substantially annular seals with the ducting sections, as shown in Figure 5, to prevent loss of air that may escape the ducting at the point they abut. As shown in Figure 6 the end face 48 of each ducting section includes a recess and a projecting rib 52. The recess 50 extends radially inwardly a distance substantially equivalent to the radial length of the flange section 24. The projection rib 52 is located radially inwardly of the recess 50 and extends longitudinally in a distance approximately equal to half the thickness of the flange 24. As such, in eth clamped configuration the flange 24 is received and located within the recess 50 of each ducting section, with the projecting ribs extending longitudinally inwards of the outer face of the flange to abut with the end face of the projecting rib of the adjacent ducting section to improve sealing between the ducting sections 2,4 and form a continuous uninterrupted ducting section.

In the clamped configuration the lugs 28 both longitudinally and rotationally fix the ducting relative to the collar 6 to prevent retraction and/or rotation within the collar 6. Rotation is prevented by engagement of the side walls of the lugs 28 within the wall of the ducting providing transverse engagement. Similarly longitudinal engagement prevents retraction from the collar 6. The ribs 38,40, in addition to sealing, also act to longitudinally fix the ducting within the collar.

It will be appreciated that in further embodiments various modifications to the specific arrangements described above and shown in the drawings may be made. For example while the above embodiments are described for an assembly having substantially circular section cylindrical ducting, the connectors and ducting may have any other suitable corresponding shapes. Figure 6 shows a collar 106 and corresponding ducting 102 having a substantially rectangular section shape. In this embodiment the first collar section 108 and second collar section 110 have substantially identical lugs 132. Also, while the ducting is described as being formed of an expanded foam material, and suitable lightweight impermeable material may be utilised.

## Claims

1. A ventilation ducting connector (6) for connecting ventilation ducting sections (2,4) formed from a compressible material, the connector being arranged to receive the free ends of two contiguous ducting sections such that the ducting sections define a continuous air conduit, the collar being reconfigurable between an open configuration in which the ducting sections may be freely inserted into the collar and a clamped configuration in which it surrounds part of each ducting section and provides a compressive force to hold the ducting sections in a relative position, **characterised in that** the collar comprises at least one inwardly extending projection (28) arranged on its inner surface to penetrate the outer surface of at least one of the ducting sections when the collar is in the clamped configuration.

2. A ventilation ducting connector according to any preceding claim wherein the at least one projection comprises at least one of a sealing member (38, 40) configured to penetrate or compress the surface of the ducting section and create a seal between the ducting section and the collar, and a holding member (32) configured to penetrate the surface of the ducting section to hold the collar and the ducting section in a fixed relative position.

3. A ventilation ducting connector according to claim 2 wherein the collar comprises a longitudinal axis which aligns with the longitudinal axes of the corresponding ducting sections and wherein the sealing member comprises at least one rib (38, 40) extending around the inner surface of the collar transversely to the longitudinal axis, and/or wherein the at least one rib comprises a first rib extending substantially continuously around the inner surface of the collar at a first end of the collar and a second rib extending substantially continuously around the inner surface of the collar at the opposing second end of the collar.

4. A ventilation ducting connector according to claim 3 wherein the at least one rib tapers inwardly towards its distal edge.

5. A ventilation ducting connector according to any one of claims 2 to 4 wherein the collar comprises a longitudinal axis which aligns with the longitudinal axes of the corresponding ducting sections and wherein the holding member comprises and at least one projection extending from the inner surface of the collar at a discrete position around the inner periphery in a direction transverse to the longitudinal axis.

6. A ventilation ducting connector according to claim 5 wherein the at least one individual projection comprises a plurality of discrete individual projections arranged at spaced locations in the transverse direction around the inner surface of the collar, and/or
wherein at least two of the individual projections are spaced from each other in the longitudinal direction, and/or
wherein at least one of the individual projections includes a distal face which slopes inwardly substantially in the direction of the centre of the collar in the transverse direction.

7. A ventilation ducting connector according to claim 6 wherein the collar comprises a first collar section (8) and a section collar section (10) which are relatively movable to allow the collar to be reconfigured between the open and clamped configurations and a centre point is defined between the transverse ends of the first collar section, and wherein the at least one projection includes first and second projections located at transversely spaced locations on opposing sides of the centre line having distal faces which slope inwardly in opposing transverse directions towards the centre of the collar arranged to create opposing wedging actions to urge the ducting section in opposing transverse directions as the first and second projections penetrate the ducting section.

8. A ventilation ducting connector according to claim 7 comprising a first pair of first and second projections located at a first longitudinal end of the collar and a second pair of first and second projections located at an opposing second longitudinal end of the collar.

9. A ventilation ducting connector according to any one of claims 6 to 8 wherein a first plurality of discrete individual projections are arranged proximate a first end of the collar and a second plurality of discrete individual projections are arranged proximate the opposing end of the collar.

10. A ventilation ducting connector according to claim 9 wherein the collar comprises a first collar section and a second collar section which are relatively movable to allow the collar to be reconfigured between the open and clamped configurations, and/or
comprising at least one locking means (20, 22) for locking the first and second sections together in the clamped configuration.

11. A ventilation ducting connector according to claim 10 wherein the first and second collar sections are detachable sections and the collar comprises at least two locking means located on opposing sides of the collar for locking the respective first and second ends of the first and second sections together in the clamped configuration.

12. A ventilation ducting connector according to claims 10 or 11 wherein the at least one locking means is arranged to selectively lock the first and second collar sections in a plurality of locking positions to selectively vary the clamping force by varying the resultant internal cross sectional area of the collar.

13. A ventilation ducting connector according to any preceding claim wherein the collar comprises an inwardly extending locating member configured to engage an end face of each ducting section to longitudinally locate the ducting sections relative to the collar.

14. A ventilation ducting connector according to claim 13 wherein the locating member comprises an inwardly extending flange located substantially centrally within the collar in the longitudinal direction, and/or
wherein the collar comprises first and second collar sections including a main body section and a flange section and the flange section extends past the end of at least one end of at least one of the main body section of the first and second sections to define a locating tab.

15. A ventilation ducting assembly comprising:
a plurality of ducting sections formed from a compressible material; and
a plurality of ducting section connectors according to any preceding claim;
wherein the ducting sections and connector are configured such that the end portions of adjacent ducting sections are receivable within the collar and wherein when the collar is in the clamped position it applies a compressive force to the ducting sections to hold the ducting sections in a fixed relative position with the at least one projection penetrating the surface of at least one of the ducting sections.

## Patentansprüche

1. Lüftungskanalverbinder (6) zum Verbinden von Lüftungskanalabschnitten (2, 4), die aus einem zusammendrückbaren Material gebildet sind, wobei der Verbinder eingerichtet ist, die freien Enden von zwei zusammenhängenden Kanalabschnitten derart aufzunehmen, dass die Kanalabschnitte eine durchgehende Luftleitung bilden, wobei die Manschette zwischen einer offenen Konfiguration, in welcher die Kanalabschnitte frei in die Manschette eingeführt werden können, und einer Klemmkonfiguration, in welcher sie einen Teil jedes Kanalabschnitts umgibt und eine Druckkraft zum Halten der Kanalabschnitte in einer relativen Position bereitstellt, rekonfigurierbar ist, **dadurch gekennzeichnet, dass** die Manschette mindestens einen sich nach innen erstreckenden Vorsprung (28) aufweist, der an ihrer Innenfläche angeordnet ist, um in die Außenfläche von mindestens einem der Kanalabschnitte einzudringen, wenn die Manschette in der Klemmkonfiguration ist.

2. Lüftungskanalverbinder nach einem der vorstehenden Ansprüche, wobei der mindestens eine Vorsprung mindestens eines von einem Dichtungselement (38, 40), das so konfiguriert ist, dass es in die Oberfläche des Kanalabschnitts eindringt oder diese zusammendrückt und eine Dichtung zwischen dem Kanalabschnitt und der Manschette erzeugt, und einem Halteelement (32) umfasst, das so konfiguriert ist, dass es in die Oberfläche des Kanalabschnitts eindringt, um die Manschette und den Kanalabschnitt in einer fixierten relativen Position zu halten.

3. Lüftungskanalverbinder nach Anspruch 2, wobei die Manschette eine Längsachse umfasst, die mit den Längsachsen der entsprechenden Kanalabschnitte ausgerichtet ist, und wobei das Dichtungselement mindestens eine Rippe (38, 40) umfasst, die sich quer zur Längsachse rund um die Innenfläche der Manschette erstreckt, und/oder
wobei die mindestens eine Rippe eine erste Rippe umfasst, die sich im Wesentlichen kontinuierlich rund um die Innenfläche der Manschette an einem ersten Ende der Manschette erstreckt, und eine zweite Rippe, die sich im Wesentlichen kontinuierlich rund um die Innenfläche der Manschette an dem gegenüberliegenden zweiten Ende der Manschette erstreckt.

4. Lüftungskanalverbinder nach Anspruch 3, wobei sich die mindestens eine Rippe nach innen zu ihrem distalen Rand hin verjüngt.

5. Lüftungskanalverbinder nach einem der Ansprüche 2 bis 4, wobei die Manschette eine Längsachse umfasst, die mit den Längsachsen der entsprechenden Kanalabschnitte ausgerichtet ist, und wobei das Halteelement mindestens einen Vorsprung umfasst, der sich von der Innenfläche der Manschette an einer diskreten Position rund um den Innenumfang in einer Richtung quer zur Längsachse erstreckt.

6. Lüftungskanalverbinder nach Anspruch 5, wobei der mindestens eine einzelne Vorsprung eine Vielzahl von diskreten einzelnen Vorsprüngen umfasst, die an beabstandeten Stellen in Querrichtung rund um die Innenfläche der Manschette eingerichtet sind, und/oder
wobei mindestens zwei der einzelnen Vorsprünge in Längsrichtung voneinander beabstandet sind, und/oder
wobei mindestens einer der einzelnen Vorsprünge eine distale Fläche beinhaltet, die sich im Wesentlichen in der Richtung zur Mitte der Manschette in der Querrichtung nach innen neigt.

7. Lüftungskanalverbinder nach Anspruch 6, wobei die Manschette einen ersten Manschettenabschnitt (8) und einen Abschnitt-Manschettenabschnitt (10) umfasst, die relativ beweglich sind, um zu ermöglichen, dass die Manschette zwischen der offenen und der geklemmten Konfiguration rekonfigurierbar ist, und ein Mittelpunkt zwischen den Querenden des ersten Manschettenabschnitts definiert ist, und wobei der mindestens eine Vorsprung erste und zweite Vorsprünge aufweist, die an quer beabstandeten Stellen auf gegenüberliegenden Seiten der Mittellinie angeordnet sind, welche distale Flächen aufweisen, die sich in entgegengesetzten Querrichtungen in Richtung zur Mitte der Manschette nach innen neigen wobei sie eingerichtet sind, um entgegengesetzte Keilwirkungen zu erzeugen, um den Kanalabschnitt in entgegengesetzte Querrichtungen zu drängen, wenn die ersten und zweiten Vorsprünge in den Kanalabschnitt eindringen.

8. Lüftungskanalverbinder nach Anspruch 7, umfassend ein erstes Paar von ersten und zweiten Vorsprüngen, die an einem ersten Längsende der Manschette angeordnet sind, und ein zweites Paar von ersten und zweiten Vorsprüngen, die an einem gegenüberliegenden zweiten Längsende der Manschette angeordnet sind.

9. Lüftungskanalverbinder nach einem der Ansprüche 6 bis 8, wobei eine erste Vielzahl von diskreten einzelnen Vorsprüngen unmittelbar an einem ersten Ende der Manschette eingerichtet ist und eine zweite Vielzahl von diskreten einzelnen Vorsprüngen unmittelbar an dem gegenüberliegenden Ende der Manschette eingerichtet ist.

10. Lüftungskanalverbinder nach Anspruch 9, wobei die Manschette einen ersten Manschettenabschnitt und einen zweiten Manschettenabschnitt umfasst, die relativ beweglich sind, um zu ermöglichen, dass die Manschette zwischen der offenen und der geklemmten Konfiguration rekonfigurierbar ist, und/oder
mindestens ein Verriegelungsmittel (20, 22) zum Verriegeln des ersten und zweiten Abschnitts in der Klemmkonfiguration umfasst.

11. Lüftungskanalverbinder nach Anspruch 10, wobei der erste und zweite Manschettenabschnitt ablösbare Abschnitte sind und die Manschette mindestens zwei Verriegelungsmittel umfasst, die an gegenüberliegenden Seiten der Manschette angeordnet sind, um das jeweilige erste und zweite Ende des ersten und zweiten Abschnitts in der Klemmkonfiguration miteinander zu verriegeln.

12. Lüftungskanalverbinder nach Anspruch 10 oder 11, wobei das mindestens eine Verriegelungsmittel eingerichtet ist, um den ersten und zweiten Manschettenabschnitt in einer Vielzahl von Verriegelungspositionen selektiv zu verriegeln, um die Klemmkraft durch Variation der resultierenden inneren Querschnittsfläche der Manschette selektiv zu variieren.

13. Lüftungskanalverbinder nach einem vorstehenden Ansprüche, wobei die Manschette ein sich nach innen erstreckendes Positionierelement umfasst, das so konfiguriert ist, dass es in eine Stirnfläche jedes Kanalabschnitts eingreift, um die Kanalabschnitte relativ zu der Manschette in Längsrichtung anzuordnen.

14. Lüftungskanalverbinder nach Anspruch 13, wobei das Anordnungselement einen sich nach innen erstreckenden Flansch umfasst, der im Wesentlichen mittig innerhalb der Manschette in Längsrichtung angeordnet ist, und/oder
wobei die Manschette einen ersten und einen zweiten Manschettenabschnitt umfasst, die einen Hauptkörperabschnitt und einen Flanschabschnitt beinhalten, und der Flanschabschnitt sich über das Ende von mindestens einem Ende von mindestens einem von dem Hauptkörperabschnitt des ersten und zweiten Abschnitts hinaus erstreckt, um eine Positionierungslasche zu definieren.

15. Lüftungskanalanordnung, umfassend:
eine Vielzahl von Kanalabschnitten, die aus einem zusammendrückbaren Material gebildet sind; und
eine Vielzahl von Kanalabschnittverbindern nach einem der vorstehenden Ansprüche;
wobei die Kanalabschnitte und der Verbinder so konfiguriert sind, dass die Endabschnitte benachbarter Kanalabschnitte innerhalb der Manschette aufnehmbar sind, und wobei, wenn die Manschette in der Klemmstellung ist, sie eine Druckkraft auf die Kanalabschnitte ausübt, um die Kanalabschnitte in einer fixierten relativen Position zu halten, wobei der mindestens eine Vorsprung in die Oberfläche von mindestens einem der Kanalabschnitte eindringt.

## Revendications

1. Connecteur de conduits de ventilation (6) pour la connexion de sections de conduit de ventilation (2, 4) formées à partir d'un matériau compressible, le connecteur étant agencé pour recevoir les extrémités libres de deux sections de conduit contiguës de sorte que les sections de conduit définissent un conduit d'air continu, le collier étant reconfigurable entre une configuration ouverte dans laquelle les sections de conduit peuvent être librement insérées dans le collier et une configuration serrée dans laquelle il entoure une partie de chaque section de conduit et fournit une force compressive pour maintenir les sections de conduit dans une position relative, **caractérisé en ce que** le collier comprend au moins une saillie s'étendant vers l'intérieur (28) agencée sur sa surface intérieure pour pénétrer la surface extérieure d'au moins une des sections de conduit lorsque le collier est dans la configuration serrée.

2. Connecteur de conduits de ventilation selon une quelconque revendication précédente, dans lequel la au moins une saillie comprend au moins un d'un élément d'étanchéité (38, 40) configuré pour pénétrer ou compresser la surface de la section de conduit et créer un joint d'étanchéité entre la section de conduit et le collier, et un élément de maintien (32) configuré pour pénétrer la surface de la section de conduit pour maintenir le collier et la section de conduit dans une position relative fixe.

3. Connecteur de conduits de ventilation selon la revendication 2, dans lequel le collier comprend un axe longitudinal qui s'aligne sur les axes longitudinaux des sections de conduit correspondantes et dans lequel l'élément d'étanchéité comprend au moins une nervure (38, 40) s'étendant autour de la surface intérieure du collier transversalement à l'axe longitudinal, et/ou
dans lequel la au moins une nervure comprend une première nervure s'étendant sensiblement en continu autour de la surface intérieure du collier à une première extrémité du collier et une seconde nervure s'étendant sensiblement en continu autour de la surface intérieure du collier à la seconde extrémité opposée du collier.

4. Connecteur de conduits de ventilation selon la revendication 3, dans lequel la au moins une nervure s'effile vers l'intérieur vers son arête distale.

5. Connecteur de conduits de ventilation selon l'une quelconque des revendications 2 à 4, dans lequel le collier comprend un axe longitudinal qui s'aligne sur les axes longitudinaux des sections de conduit correspondantes et dans lequel l'élément de maintien comprend au moins une saillie s'étendant depuis la surface intérieure du collier dans une position discrète autour de la périphérie intérieure dans une direction transversale à l'axe longitudinal.

6. Connecteur de conduits de ventilation selon la revendication 5, dans lequel la au moins une saillie individuelle comprend une pluralité de saillies individuelles discrètes agencées à des emplacements espacés dans la direction transversale autour de la surface intérieure du collier, et/ou
dans lequel au moins deux des saillies individuelles sont espacées l'une de l'autre dans la direction longitudinale, et/ou
dans lequel au moins une des saillies individuelles inclut une face distale qui s'incline vers l'intérieur sensiblement dans la direction du centre du collier dans la direction transversale.

7. Connecteur de conduits de ventilation selon la revendication 6, dans lequel le collier comprend une première section de collier (8) et une section de collier de section (10) qui sont mobiles relativement pour permettre au collier d'être reconfiguré entre les configurations ouverte et serrée et un point central est défini entre les extrémités transversales de la première section de collier, et dans lequel la au moins une saillie inclut des première et seconde saillies situées à des emplacements espacés transversalement sur des côtés opposés de la ligne centrale présentant des faces distales qui s'inclinent vers l'intérieur dans des directions transversales opposées vers le centre du collier, agencées pour créer des actions de coincement opposées pour pousser la section de conduit dans des directions transversales opposées lorsque les première et seconde saillies pénètrent la section de conduit.

8. Connecteur de conduits de ventilation selon la revendication 7, comprenant une première paire de première et seconde saillies situées à une première extrémité longitudinale du collier et une seconde paire de première et seconde saillies situées à une seconde extrémité longitudinale opposée du collier.

9. Connecteur de conduits de ventilation selon l'une quelconque des revendications 6 à 8, dans lequel une première pluralité de saillies individuelles discrètes sont agencées à proximité d'une première extrémité du collier et une seconde pluralité de saillies individuelles discrètes sont agencées à proximité de l'extrémité opposée du collier.

10. Connecteur de conduits de ventilation selon la revendication 9, dans lequel le collier comprend une première section de collier et une seconde section de collier qui sont mobiles relativement pour permettre au collier d'être reconfiguré entre les configurations ouverte et serrée, et/ou comprenant au moins un moyen de verrouillage (20, 22) pour le verrouillage des première et seconde sections ensemble dans la configuration serrée.

11. Connecteur de conduits de ventilation selon la revendication 10, dans lequel les première et seconde sections de collier sont des sections détachables et le collier comprend au moins deux moyens de verrouillage situés sur des côtés opposés du collier pour le verrouillage des première et seconde extrémités respectives des première et seconde sections ensemble dans la configuration serrée.

12. Connecteur de conduits de ventilation selon la revendication 10 ou 11, dans lequel l'au moins un moyen de verrouillage est agencé pour verrouiller sélectivement les première et seconde sections de collier dans une pluralité de positions de verrouillage pour varier sélectivement la force de serrage par variation de l'aire de section transversale interne résultante du collier.

13. Connecteur de conduits de ventilation selon une quelconque revendication précédente, dans lequel le collier comprend un élément de positionnement s'étendant vers l'intérieur configuré pour venir en prise avec une face d'extrémité de chaque section de conduit afin de positionner longitudinalement les sections de conduit par rapport au collier.

14. Connecteur de conduits de ventilation selon la revendication 13, dans lequel l'élément de positionnement comprend une bride s'étendant vers l'intérieur située sensiblement centralement dans le collier dans la direction longitudinale, et/ou
dans lequel le collier comprend des première et seconde sections de collier incluant une section de corps principal et une section de bride et la section de bride s'étend après l'extrémité d'au moins une extrémité d'au moins une de la section de corps principal des première et seconde sections pour définir une patte de positionnement.

15. Ensemble de conduits de ventilation comprenant :
une pluralité de sections de conduit formées à partir d'un matériau compressible ; et
une pluralité de connecteurs de sections de conduit selon une quelconque revendication précédente ;
dans lequel les sections de conduit et le connecteur sont configurés de sorte que les portions d'extrémité de sections de conduit adjacentes puissent être reçues dans le collier et dans lequel lorsque le collier est dans la position serrée, il applique une force compressive aux sections de conduit pour maintenir les sections de conduit dans une position relative fixe avec la au moins une saillie pénétrant la surface d'au moins une des sections de conduit.
